# EUROPEAN PATENT APPLICATION

(11) **EP 4 408 046 A1**
(43) Date of publication of application: **31.07.2024**
(21) Application number: 22882642.6
(22) Date of filing: 08.10.2022
(51) Int. Cl.: H04W 8/24, H04W 68/02

(54) **COMMUNICATION METHOD AND COMMUNICATION APPARATUS**

(30) Priority: 22.10.2021 CN 202111233914
(71) Applicant: Huawei Technologies Co., Ltd., Shenzhen, Guangdong 518129 (CN)
(72) Inventor: XIANG, Hongyu, Shenzhen, Guangdong 518129 (CN); LI, Bingzhao, Shenzhen, Guangdong 518129 (CN); CHEN, Lei, Shenzhen, Guangdong 518129 (CN); HAN, Feng, Shenzhen, Guangdong 518129 (CN); LI, Chenwan, Shenzhen, Guangdong 518129 (CN)
(74) Representative: Pfenning, Meinig & Partner mbB
(86) International application number: PCT/CN2022/123859
(87) International publication number: WO 2023/066032

(57) **Abstract**

This application discloses a communication method and a communication apparatus. The method includes: A first access network device receives paging capability information from a core network device or a second access network device, determines a paging area based on the paging capability information, and sends a paging message to a terminal device in the determined paging area. The paging capability information indicates one or more of the following capabilities: a maximum transmit power supported by the terminal device on a first frequency band; a bandwidth configuration supported by the terminal device; whether the terminal device supports a frequency offset of 7.5 kHz; a type of the terminal device; or a number of Rx chains supported by the terminal device. In other words, the paging capability information indicates a plurality of paging capabilities of the terminal device. In this way, the first access network device determines the paging area based on the plurality of paging capabilities of the terminal device, and may exclude a cell on which the terminal device does not camp, so as to avoid paging the terminal device in the cell on which the terminal device does not camp as much as possible, thereby saving paging resources.

## Description

### CROSS-REFERENCE TO RELATED APPLICATIONS

This application claims priority to Chinese Patent Application No. 202111233914.9, filed with the China National Intellectual Property Administration on October 22, 2021 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

An access network device may indicate, through paging, a terminal device to receive data or signaling. Before sending paging, the access network device needs to determine a specific paging range, that is, an area in which the access network device sends paging (referred to as a paging area for short), to send paging in the determined paging area. Currently, before determining the paging area for the terminal device, the access network device may obtain a frequency band supported by the terminal device, and page the terminal device in all cells corresponding to the frequency band supported by the terminal device. In other words, currently, the cells corresponding to the frequency band supported by the terminal device are considered as the paging area.

However, in some scenarios, the terminal device may not camp on one or more cells corresponding to the frequency band supported by the terminal device. In this case, if the access network device still pages the terminal device in all the cells corresponding to the frequency band supported by the terminal device, a waste of paging resources is caused. Therefore, how to properly determine the paging area for the terminal device becomes a technical problem to be urgently resolved.

### SUMMARY

This application provides a communication method and a communication apparatus, so that an access network device can properly determine a paging area in which a terminal device is paged, to save paging resources.

According to a first aspect, a communication method is provided. The method may be performed by a first communication apparatus. The first communication apparatus may be a communication device or a communication apparatus, for example, a chip system, that can support the communication device in implementing a function required in the method. An example in which the communication device is a first access network device is used below for description. The method includes:

The first access network device receives paging capability information from a core network device or a second access network device, determines a paging area based on the paging capability information, and sends a paging message to a terminal device in the determined paging area. The paging capability information indicates one or more of the following capabilities: a maximum transmit power supported by the terminal device on a first frequency band; a bandwidth configuration supported by the terminal device; whether the terminal device supports a frequency offset of 7.5 kHz; a type of the terminal device; or a number of radio frequency chains (Rx chains) supported by the terminal device.

Correspondingly, according to a second aspect, a communication method is provided. The method may be performed by a second communication apparatus. The second communication apparatus may be a communication device or a communication apparatus, for example, a chip system, that can support the communication device in implementing a function required in the method. An example in which the communication device is a core network device or a second access network device is used below for description. The method includes:

The core network device or the second access network device obtains paging capability information of a terminal device, and sends the paging capability information to a first access network device. The paging capability information indicates one or more of the following capabilities: a maximum transmit power supported by the terminal device on a first frequency band; a bandwidth configuration supported by the terminal device; whether the terminal device supports a frequency offset of 7.5 kHz; a type of the terminal device; or a number of Rx chains supported by the terminal device.

In this embodiment of this application, the core network device or the second access network device may provide the first access network device with more capability information of the terminal device, for example, the maximum transmit power supported by the terminal device on the first frequency band, the bandwidth configuration supported by the terminal device, whether the terminal device supports the frequency offset of 7.5 kHz, the type of the terminal device, or the number of Rx chains supported by the terminal device. According to the technical solution provided in this application, the first access network device may determine a paging area based on a plurality of pieces of capability information of the terminal device, that is, determine cells in which the terminal device is paged, so as to avoid paging the terminal device in a cell on which the terminal device does not camp as much as possible, thereby saving paging resources.

In a possible implementation of the first aspect or the second aspect, the paging capability information is a capability information identifier of the terminal device. In this solution, the paging capability information is indicated based on capability identifier information, so that signaling overheads used to indicate the paging capability information can be reduced.

In a possible implementation of the first aspect, the paging area determined by the first access network device based on the paging capability information varies with a capability of the terminal device. For example, when the first access network device determines, based on the capability of the terminal device, that any one of the following conditions 1 to 4 is met, the paging area does not include a first cell.

The condition 1 includes that the type of the terminal device is not an integrated access and backhaul (integrated access and backhaul, IAB) mobile termination (mobile terminal, MT), the maximum transmit power supported by the terminal device does not meet a transmit power requirement of the first frequency band, and the first frequency band corresponds to the first cell. In this solution, the core network device or the second access network device may report, to the first access network device, the maximum transmit power supported by the terminal device. It should be understood that, in consideration of interference between adjacent frequencies between networks, a maximum transmit power of the terminal device on an additional frequency band, for example, the first frequency band, is limited. If the maximum transmit power that is supported by the terminal device and that is indicated by the paging capability information does not meet the transmit power requirement of the first frequency band, and the type of the terminal device is not the IAB-MT, the terminal device does not camp on the first cell. In this case, the first access network device may determine not to page the terminal device in the first cell, that is, the paging area does not include the first cell. Compared with a current case in which the first access network device determines the paging area based on the obtained frequency band supported by the terminal device, a range of the paging area can be further narrowed down, thereby saving paging resources.

The condition 2 includes that the bandwidth configuration supported by the terminal device is less than an initial bandwidth of the first cell, or the bandwidth configuration supported by the terminal device is greater than a carrier bandwidth of the first cell. It should be understood that the core network device or the second access network device may report, to the first access network device, the bandwidth configuration supported by the terminal device. In this solution, the first access network device may compare the bandwidth configuration supported by the terminal device with an initial bandwidth or a carrier bandwidth of each cell, to determine cells on which the terminal device does not camp. For example, if the bandwidth configuration supported by the terminal device is less than the initial bandwidth of the first cell, or the bandwidth configuration supported by the terminal device is greater than the carrier bandwidth of the first cell, the first access network device does not need to page the terminal device in the first cell, that is, the paging area does not include the first cell.

The condition 3 includes that the terminal device does not support the frequency offset of 7.5 kHz, and the frequency offset of 7.5 kHz is set for the first cell. In this solution, the core network device and the second access network device may report, to the first access network device, whether the terminal device supports the frequency offset of 7.5 kHz, so that the first access network device determines whether to page the terminal device in the cell in which the frequency offset of 7.5 kHz is set. If the terminal device does not support the frequency offset of 7.5 kHz, and the frequency offset of 7.5 kHz is set for the first cell, the terminal device does not camp on the first cell. The first access network device may determine that the paging area does not include the first cell, that is, the first access network device does not page the terminal device in the first cell, thereby saving paging resources.

The condition 4 includes that the number of Rx chains (Rx chains) supported by the terminal device is P, and the first cell is barred for the terminal device with the P Rx chains to access. Terminal devices of a same type may support different quantities of Rx chains. For example, a low-complexity or reduced capability (Reduced Capability, REDCAP) terminal device may support one Rx chain, or may support two Rx chains. The number of Rx chains supported by the terminal device may be used to represent a capability of the terminal device. Considering that each cell may be barred or allowed for a terminal device supporting a specific number of Rx chains to access a network, according to this solution, the first access network device may page, based on the number P of Rx chains supported by the terminal device, the terminal device in a cell that is allowed for the terminal device with the P Rx chains to access, to save paging resources.

It may be understood that, when any one of the condition 1 to the condition 4 is met, the first access network device determines that the paging area does not include the first cell. When the condition 1 is not met, the first access network device may further determine whether the condition 2 is met, and determine whether the paging area includes the first cell. With evolution of technologies, another determining condition may be further added to the foregoing condition 1 to condition 4, and the paging area may still be determined based on the paging capability information.

It may be understood that, even if the foregoing condition 1 to condition 4 are not met, if none of a selected public land mobile network (public land mobile network, PLMN), a registered PLMN, and an equivalent PLMN that correspond to the first cell provides tracking area code, the first access network device determines that the paging area does not include the first cell. It should be understood that, if none of the selected PLMN, the registered PLMN, and the equivalent PLMN that correspond to the first cell provides the tracking area code, the first cell is not allowed for the terminal device to access. It may also be considered that the terminal device considers that the first cell is barred. In this case, the terminal device does not camp on the first cell. According to this solution, the first access network device can avoid paging the terminal device in the first cell, thereby saving paging resources.

In a possible implementation of the first aspect, the first access network device includes a central unit (central unit, CU) and a distributed unit (distributed unit, DU). In this case, the first access network device may determine the paging area via the CU or the DU. This is flexible. For example, the first access network device may receive the paging capability information via the CU, and determine the paging area via the CU. Alternatively, the first access network device receives the paging capability information via the CU, and sends the paging capability information to the DU via the CU. In this way, the DU may determine the paging area based on the paging capability information from the CU.

According to a third aspect, an embodiment of this application provides a communication apparatus. The communication apparatus may have a function of implementing behavior in the method instance of the first aspect. For beneficial effect, refer to the descriptions of the first aspect. Details are not described herein again. The communication apparatus may be the first access network device in the first aspect, or the communication apparatus may be an apparatus, for example, a chip or a chip system, that can support the first access network device in the first aspect in implementing a function required in the method provided in the first aspect.

In a possible design, the communication apparatus includes a corresponding means (means) or module configured to perform the method in the first aspect. For example, the communication apparatus includes a processing unit (or referred to as a processing module) and/or a transceiver unit (or referred to as a transceiver module). These units (modules) may perform a corresponding function in the method example in the first aspect. For example, the communication apparatus includes a transceiver module and a processing module. The transceiver module is configured to receive paging capability information from a core network device or a second access network device. The processing module may determine a paging area based on the paging capability information. The transceiver module may be further configured to send a paging message to a terminal device in the determined paging area. The paging capability information indicates one or more of the following capabilities: a maximum transmit power supported by the terminal device on a first frequency band; a bandwidth configuration supported by the terminal device; whether the terminal device supports a frequency offset of 7.5 kHz; a type of the terminal device; or a number of Rx chains supported by the terminal device.

According to a fourth aspect, an embodiment of this application provides a communication apparatus. The communication apparatus may have a function of implementing behavior in the method instance of the second aspect. For beneficial effect, refer to the descriptions of the second aspect. Details are not described herein again. The communication apparatus may be the core network device or the second access network device in the second aspect, or the communication apparatus may be an apparatus, for example, a chip or a chip system, that can support the core network device or the second access network device in the second aspect in implementing a function required in the method provided in the second aspect.

In a possible design, the communication apparatus includes a corresponding means (means) or module configured to perform the method in the second aspect. For example, the communication apparatus includes a processing unit (or referred to as a processing module) and/or a transceiver unit (or referred to as a transceiver module). These units (modules) may perform a corresponding function in the method example in the second aspect. For example, the communication apparatus includes a transceiver module and a processing module. The processing module may obtain paging capability information of a terminal device. The transceiver module may be configured to send the paging capability information to the first access network device. The paging capability information indicates one or more of the following capabilities: a maximum transmit power supported by the terminal device on a first frequency band; a bandwidth configuration supported by the terminal device; whether the terminal device supports a frequency offset of 7.5 kHz; a type of the terminal device; or a number of Rx chains supported by the terminal device.

According to a fifth aspect, an embodiment of this application provides a communication apparatus. The communication apparatus may be the communication apparatus in the third aspect or the fourth aspect in the foregoing embodiment, or a chip or a chip system disposed in the communication apparatus in the third aspect or the fourth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus performs the method performed by the first access network device, the core network device, or the second access network device in the foregoing method embodiment.

According to a sixth aspect, an embodiment of this application provides a communication apparatus. The communication apparatus includes an input/output interface and a logic circuit. The input/output interface is configured to input and/or output information. The logic circuit is configured to perform the method in the first aspect or the second aspect.

According to a seventh aspect, an embodiment of this application provides a chip system. The chip system includes a processor, and may further include a memory and/or a communication interface, configured to implement the method in the first aspect or the second aspect. In a possible implementation, the chip system further includes a memory, configured to store program instructions and/or data. The chip system may include a chip, or may include the chip and another discrete component.

According to an eighth aspect, an embodiment of this application provides a communication system. The communication system includes the communication apparatus in the third aspect and the communication apparatus in the fourth aspect. Alternatively, the communication system includes the communication apparatus in the third aspect and the communication apparatus in the fifth aspect that is configured to perform the method in the second aspect. Alternatively, the communication system includes the communication apparatus in the fourth aspect and the communication apparatus in the fifth aspect that is configured to perform the method in the second aspect. The communication system may perform corresponding functions in the method examples in the first aspect and the second aspect. For example, the communication system includes a first access network device, a core network device, and a terminal device. The core network device may be configured to: obtain paging capability information of the terminal device, and send the paging capability information to the first access network device. The first access network device is configured to: determine a paging area based on the paging capability information, and send a paging message to the terminal device in the determined paging area. The paging capability information indicates one or more of the following capabilities: a maximum transmit power supported by the terminal device on a first frequency band; a bandwidth configuration supported by the terminal device; whether the terminal device supports a frequency offset of 7.5 kHz; a type of the terminal device; or a number of Rx chains supported by the terminal device.

In an optional implementation, the paging capability information is a capability information identifier of the terminal device.

In an optional implementation, the one or more capabilities include the type of the terminal device and the maximum transmit power supported by the terminal device on the first frequency band, and that the first access network device determines a paging area based on the paging capability information includes: When the type of the terminal device is not an IAB-MT, and the maximum transmit power supported by the terminal device on the first frequency band does not meet a transmit power requirement of the first frequency band, the first access network device determines that the paging area does not include a first cell, where the first frequency band corresponds to the first cell.

In an optional implementation, the one or more capabilities include the bandwidth configuration supported by the terminal device, and that the first access network device determines a paging area based on the paging capability information includes: When the bandwidth configuration supported by the terminal device is less than an initial bandwidth of the first cell, or the bandwidth configuration supported by the terminal device is greater than a carrier bandwidth of the first cell, the first access network device determines that the paging area does not include the first cell.

In an optional implementation, the one or more capabilities include whether the terminal device supports the frequency offset of 7.5 kHz, and that the first access network device determines a paging area based on the paging capability information includes: When the terminal device does not support the frequency offset of 7.5 kHz, and the frequency offset of 7.5 kHz is set for the first cell, the first access network device determines that the paging area does not include the first cell.

In an optional implementation, the one or more capabilities include the number of Rx chains supported by the terminal device, and that the first access network device determines a paging area based on the paging capability information includes: When the number of Rx chains supported by the terminal device is P, and the first cell is barred for the terminal device with the P Rx chains to access, the first access network device determines that the paging area does not include the first cell.

In an optional implementation, the first access network device is specifically configured to: if it is determined that none of a selected PLMN, a registered PLMN, and an equivalent PLMN that correspond to the first cell provides tracking area code, determine that the paging area does not include the first cell.

In an optional implementation, the first access network device includes a CU and a DU. The first access network device receives the paging capability information via the CU, and determines the paging area via the CU.

In an optional implementation, the first access network device includes a CU and a DU, and the first access network device receives the paging capability information via the CU, and sends the paging capability information to the DU via the CU for the DU to determine the paging area.

According to a ninth aspect, this application provides a computer-readable storage medium. The computer-readable storage medium stores a computer program. When the computer program is run, the method in the first aspect or the second aspect is implemented.

According to a tenth aspect, a computer program product is provided. The computer program product includes computer program code. When the computer program code is run, the method in the first aspect or the second aspect is enabled to be performed.

For beneficial effect of the third aspect to the tenth aspect and the implementations of the third aspect to the tenth aspect, refer to descriptions of beneficial effect of any one of the first aspect and the second aspect and the possible implementations of any one of the first aspect and the second aspect.

### BRIEF DESCRIPTION OF DRAWINGS

FIG. 1 is a schematic diagram of a network architecture to which an embodiment of this application is applicable;
FIG. 2 is a schematic flowchart of a first communication method according to an embodiment of this application;
FIG. 3 is a schematic flowchart of a second communication method according to an embodiment of this application;
FIG. 4 is a schematic flowchart of a third communication method according to an embodiment of this application;
FIG. 5 is a schematic flowchart of a fourth communication method according to an embodiment of this application;
FIG. 6 is a schematic diagram of a structure of a communication apparatus according to an embodiment of this application;
FIG. 7 is a schematic diagram of another structure of a communication apparatus according to an embodiment of this application; and
FIG. 8 is a schematic diagram of an example of a structure of a communication apparatus according to an embodiment of this application.

### DESCRIPTION OF EMBODIMENTS

To facilitate understanding of the technical solutions provided in embodiments of this application, some technical terms in embodiments of this application are first explained and described.

(1) A terminal device may be user equipment (user equipment, UE), and is sometimes also referred to as a terminal, an access station, a UE station, a remote station, a wireless communication device, a user apparatus, or the like. The terminal device is a device that has a wireless transceiver function, and may send a signal to a network device, or receive a signal from the network device. The terminal device is configured to connect a person, an object, a machine, and the like, and may be widely used in various scenarios. For example, the terminal device includes but is not limited to terminal devices in the following scenarios: cellular communication, device-to-device (device-to-device, D2D) communication, vehicle to everything (vehicle to everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), telemedicine (remote medical), a smart grid (smart grid), smart furniture, smart office, a smart wearable, smart transportation, a smart city (smart city), an uncrewed aerial vehicle, and a robot.

The terminal device in embodiments of this application may be a mobile phone (mobile phone), a tablet computer (Pad), a computer with a wireless transceiver function, a VR terminal, an AR terminal, a wireless terminal in industrial control (industrial control), a wireless terminal in self-driving (self-driving), a smart speaker in an IoT network, a wireless terminal device in telemedicine, a wireless terminal device in a smart grid, a wireless terminal device in transportation security, a wireless terminal device in a smart city, or a wireless terminal device in a smart home, or the like. By way of example, and not limitation, in embodiments of this application, the terminal device may be alternatively a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes.

The terminal device may further include a relay (relay). Alternatively, it is understood that any device that can perform data communication with a base station may be considered as the terminal device. If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board unit, OBU). In addition, in embodiments of this application, the terminal device may be an apparatus configured to implement a function of a terminal, or may be an apparatus, for example, a chip system, that can support the terminal device in implementing the function. The apparatus may be installed in the terminal device. For example, the terminal device may alternatively be a vehicle detector. In embodiments of this application, the chip system may include a chip, or may include the chip and another discrete component. In the technical solutions provided in embodiments of this application, an example in which the apparatus configured to implement the function of the terminal is the terminal device is used to describe the technical solutions provided in embodiments of this application.

(2) An access network device is an access device through which a terminal device accesses a mobile communication system in a wireless manner, and includes an access network (access network, AN) device, for example, a base station. The network device may alternatively be a device that communicates with the terminal device over an air interface. The network device may include an evolved NodeB (evolved NodeB) in an LTE system or a long term evolution-advanced (long term evolution-advanced, LTE-A) system, where the evolved NodeB may be referred to as an eNB or an e-NodeB for short. The eNB is an apparatus, deployed in a radio access network, that meets a fourth generation (fourth generation, 4G) mobile communication technology standard and that provides a wireless communication function for the terminal device. The network device may alternatively be a new radio controller (new radio controller, NR controller), a gNB (gNodeB, gNB) in a 5G system, a central unit (central unit), a new radio base station, a radio remote module, a micro base station (also referred to as a small cell), a relay (relay), a distributed unit (distributed unit), a macro base station in various forms, a transmission reception point (transmission reception point, TRP), a transmission measurement function (transmission measurement function, TMF), a transmission point (transmission point, TP), or any other radio access device. However, embodiments of this application are not limited thereto. The network device may alternatively include a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (base band unit, BBU), a wireless fidelity (wireless fidelity, Wi-Fi) access point (access point, AP), or the like. A specific technology and a specific device form that are used for the access network device are not limited in embodiments of this application. The access network device may correspond to the eNB in a 4G system, and correspond to the gNB in the 5G system.

In addition, the base station in embodiments of this application may include the central unit (central unit, CU) and the distributed unit (distributed unit, DU), and a plurality of DUs may be centrally controlled by one CU. The CU and the DU may be divided based on a protocol layer function that the CU and the DU each have in a wireless network. For example, functions of a packet data convergence protocol (packet data convergence protocol, PDCP) layer and a protocol layer above the packet data convergence protocol layer are set on the CU, and functions of protocol layers below the PDCP layer, for example, a radio link control (radio link control, RLC) layer and a medium access control (medium access control, MAC) layer, are set on the DU. It should be noted that division into the protocol layers is merely an example, and there may be another division of protocol layers. A radio frequency apparatus may be remotely deployed and not placed in the DU, or may be integrated into the DU, or may be partially remotely disposed and partially integrated into the DU. This is not limited in embodiments of this application. In addition, in some embodiments, a control plane (control plane, CP) and a user plane (user plane, UP) of the CU may be further separated into different entities for implementation, where the entities are respectively a control-plane CU entity (CU-CP entity) and a user-plane CU entity (CU-UP entity). In the network architecture, signaling generated by the CU may be sent to the terminal device via the DU, or signaling generated by UE may be sent to the CU via the DU. The DU may transparently transmit the signaling to the UE or the CU by directly encapsulating the signaling at a protocol layer without parsing the signaling. In the network architecture, the CU is classified as an access network device on a radio access network (radio access network, RAN) side. In addition, the CU may alternatively be classified as an access network device on a core network (core network, CN) side. This is not limited in this application.

In embodiments of this application, an apparatus configured to implement the function of the access network device may be an access network device, or may be an apparatus, for example, a chip system, that can support the access network device in implementing the function. The apparatus may be installed in the access network device. In the technical solutions provided in embodiments of this application, an example in which the apparatus configured to implement the function of the access network device is the access network device is used to describe the technical solutions provided in embodiments of this application.

(3) The core network device may correspond to different devices in different systems. For example, in a 4G system, the core network device may be a mobility management entity (mobility management entity, MME) and/or a serving gateway (serving gateway, S-GW). In a 5G system, the core network device may be an access and mobility management function (access and mobility management function, AMF), a session management function (session management function, SMF), or a user plane function (user plane function, UPF).

(4) "At least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. The character "/" generally indicates an "or" relationship between the associated objects. "At least one item (piece) of the following" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, unless otherwise stated, ordinal numbers such as "first" and "second" in embodiments of this application are for distinguishing between a plurality of objects, but are not intended to limit an order, a time sequence, priorities, or importance of the plurality of obj ects. For example, a first cell access barring indication and a second cell access barring indication are merely used to distinguish between different types, but do not indicate different content, priorities, sending sequences, importance degrees, or the like of the two types.

The foregoing describes some technical terms used in embodiments of this application. The following describes technical features of embodiments of this application.

The access network device may indicate, through paging, a terminal device in a radio resource control (radio resource control, RRC) idle mode (RRC_IDLE) or an RRC inactive mode (RRC_INACTIVE) to receive data or signaling. Abasic paging procedure is as follows: The access network device may select a specific paging range, that is, an area in which the access network device sends paging (referred to as a paging area for short). For example, for the terminal device in the RRC idle mode, the access network device may use a registration area (registration area) to which the terminal device belongs as the paging area. For the terminal device in the RRC inactive mode, the access network device may use a radio access network-based notification area (RAN-based notification area, RNA) to which the terminal device belongs as the paging area. Before determining the paging area for the terminal device, the access network device may obtain a frequency band supported by the terminal device, and page the terminal device in a cell corresponding to the frequency band supported by the terminal device. However, in some scenarios, the terminal device may not camp on one or more cells corresponding to the frequency band supported by the terminal device. In this case, if the access network device still pages the terminal device in the cell corresponding to the frequency band supported by the terminal device, a waste of paging resources is caused.

For example, for a REDCAP terminal device, according to a number of receive antennas of the REDCAP terminal device, the REDCAP terminal device may be classified into a terminal device with one Rx chain (1 Rx chain) and a terminal device with two Rx chains (2 Rx chains). Currently, the REDCAP terminal device with the 1 Rx chain or the 2 Rx chains may be defined to be barred to access a network. It is assumed that the access network device needs to page the REDCAP terminal device with the 2 Rx chains. If the access network device determines the paging area only based on the frequency band supported by the REDCAP terminal device, the determined paging area may include a cell, for example, the first cell, that is barred for the REDCAP terminal device with the 2 Rx chains to access. Because the REDCAP terminal device with the 2 Rx chains does not camp on the first cell, if the access network device pages the REDCAP terminal device with the 2 Rx chains in the first cell, a waste of paging resources is caused. It should be noted that the foregoing number of Rx chains being 1 or 2 is merely an example, and a number of Rx chains of the terminal device is not limited in this application.

In view of this, an embodiment of this application provides a communication method. In the method, a core network device may provide more capability information of a terminal device for an access network, to enable the access network device to determine a paging area based on a plurality of pieces of capability information of the terminal device, so as to avoid paging the terminal device in a cell on which the terminal device does not camp as much as possible, thereby saving paging resources.

The technical solutions provided in embodiments of this application may be used in a 5G mobile communication system, for example, a new radio (new radio, NR) system, or may be used in a long term evolution (long term evolution, LTE) system, or may be used in a next generation mobile communication system or another similar communication system.

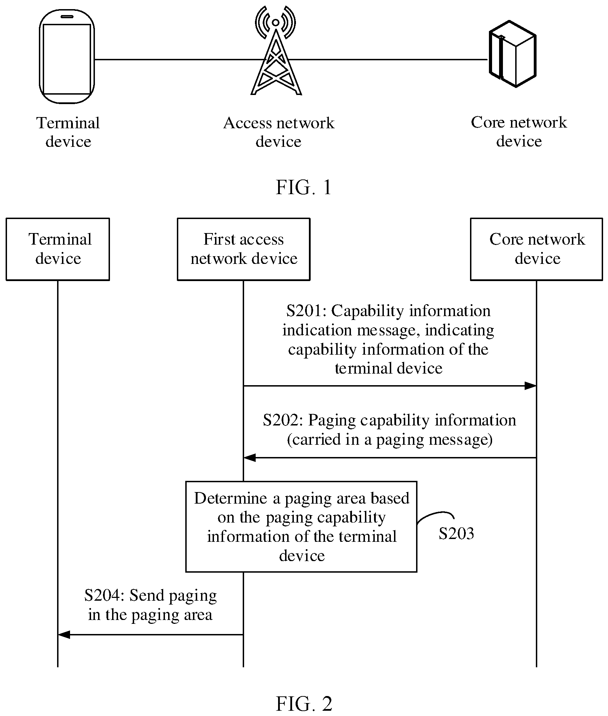

FIG. 1 is an example diagram of an architecture of a communication system to which an embodiment of this application is applicable. The communication system may include a core network device, a network device, and at least one terminal device. As shown in FIG. 1, an example in which the at least one terminal device is one terminal device is used. The terminal device is connected to the network device in a wireless manner, and the network device is connected to the core network device in a wireless manner or a wired manner. The core network device and the network device may be different physical devices that are independent of each other; or functions of the core network device and logical functions of the network device are integrated into a same physical device; or some functions of the core network device and some functions of the network device are integrated into a same physical device. It should be noted that FIG. 1 is merely an example. Quantities of core network devices, network devices, and terminal devices included in the mobile communication system are not limited in embodiments of this application. In some embodiments, the communication system may further include another network device, for example, a wireless relay device or a wireless backhaul device. In addition, the terminal device in this embodiment of this application may include a REDCAP terminal device.

With reference to the accompanying drawings, the following describes the solutions provided in embodiments of this application.

According to a network element that triggers paging, paging may be classified into core network-triggered paging (also referred to as CN paging) and radio access network-triggered paging (also referred to as RAN paging). A network may initiate CN paging for a terminal device in an RRC idle mode, or may initiate CN paging or RAN paging for a terminal device in an RRC inactive mode. During CN paging, a core network device indicates an access network device to initiate paging for the terminal device in the RRC idle mode. After receiving the indication of the core network device, the access network device initiates CN paging for the terminal device in the RRC idle mode.

With reference to the related accompanying drawings, the following describes a communication method, that is, a procedure of a new paging method provided in embodiments of this application. In the following description process, an example in which the communication method provided in an embodiment of this application is applied to the network architecture shown in FIG. 1 is used. In addition, the method may be performed by two communication apparatuses. The two communication apparatuses are, for example, a first communication apparatus and a second communication apparatus. The first communication apparatus may be a first access network device or a communication apparatus that can support the first access network device in implementing a function required in the method. Certainly, the first communication apparatus may alternatively be another communication apparatus, for example, a chip system. The second communication apparatus may be a core network device (or a second access network device) or a communication apparatus that can support the core network device (or the second access network device) in implementing a function required in the method. Certainly, the second communication apparatus may be another communication apparatus, for example, a chip system. Implementations of the first communication apparatus and the second communication apparatus are not limited. For example, the first communication apparatus may be a first access network device, and the second communication apparatus is a core network device or a second access network device; the first communication apparatus is a communication apparatus that can support the first access network device in implementing a function required in the method, and the second communication apparatus is a core network device or a second access network device; or the like. The first access network device is an access network device that currently serves a terminal device, and the second access network device is a last access network device that serves the terminal device before the first access network device.

The following uses an example in which the communication method provided in this embodiment of this application is performed by the first access network device and the core network device (or the second access network device). If this embodiment of this application is applied to the network architecture shown in FIG. 1, the first access network device described below may be the access network device in the network architecture shown in FIG. 1, and the core network device described below may be the core network device in the network architecture shown in FIG. 1. It should be noted that this embodiment of this application is performed only by the first access network device and the core network device as an example. In addition, a type of the terminal device is not limited in this embodiment of this application. For example, the terminal device may be a machine-type terminal device (for example, a REDCAP terminal device), or may be a legacy (legacy) terminal device (for example, an enhanced mobile broadband (enhanced mobile broadband, eMBB) terminal device). That the terminal device considers that a cell is barred may be considered that the cell is not allowed for the terminal device to access, or the terminal device does not camp on the cell.

First, CN paging is described. FIG. 2 is a schematic flowchart of a first communication method according to an embodiment of this application. As shown in FIG. 2, a CN paging procedure is as follows.

S201: A first access network device sends a capability information indication message to a core network device, and correspondingly, the core network device receives the capability information indication message from the first access network device, where the capability information indication message indicates capability information of a terminal device.

Optionally, before step S201, the first access network device may obtain a capability of the terminal device from the terminal device. For example, the first access network device may request to obtain the capability of the terminal device from the terminal device, and the terminal device sends the capability information to the first access network device in response to the request of the first access network device, where the capability information indicates the capability of the terminal device. It should be understood that the first access network device may obtain capability information of a plurality of terminal devices. Considering that a data amount of the capability information of the plurality of terminal devices is large, and a large number of storage resources of the first access network device are occupied, the first access network device may notify the core network device of the obtained capability information of the terminal devices. The core network device may store the capability information of the terminal devices. When needing the capability information of the terminal device, the first access network device may obtain the capability information from the core network device. It should be noted that the capability information of the terminal device may indicate a plurality of capabilities of the terminal device. This embodiment of this application mainly relates to a paging capability of the terminal device. Therefore, information related to the paging capability of the terminal device is mainly described, and another capability of the terminal device is not described herein. For example, the capability information of the terminal device may include paging capability information of the terminal device (UE radio paging information), and the paging capability information may indicate the paging capability of the terminal device.

After the first access network device obtains the capability information of the terminal device, the first access network device may send the capability information indication message of the terminal device (UE radio capability info indication) to the core network device. The capability information indication message may indicate the capability information of the terminal device. For example, the capability information indication message may include the paging capability information of the terminal device. For example, the paging capability information that is of the terminal device and that is sent by the first access network device to the core network based on the capability information indication message of the terminal device includes a frequency band supported by the terminal device. During CN paging or RAN paging, a cell corresponding to the frequency band supported by the terminal device may be selected as a paging area. Because the cell corresponding to the frequency band supported by the terminal device may include a cell on which the terminal device does not camp, a waste of paging resources is caused. For example, a frequency band supported by UE 1 corresponds to a cell 1 and a cell 2. The cell 1 is barred for a terminal device with 1 Rx chain to access, and the UE 1 has 1 Rx chain. In this case, the UE 1 does not camp on the cell 1. It is useless for the first access network device to page the UE 1 in the cell 1, and a waste of paging resources is caused. For another example, if the cell 1 supports a frequency offset of 7.5 kHz, UE 2 that does not support the frequency offset of 7.5 kHz does not camp on the cell 1. It is also useless for the first access network device to page the UE 2 in the cell 1, and a waste of paging resources is also caused.

Therefore, in this embodiment of this application, in addition to the frequency band supported by the terminal device, other paging capability information may be further included in the paging capability information carried in the capability information indication message of the terminal device may further include, for example, a bandwidth configuration supported by the terminal device and a number of Rx chains supported by the terminal device, to assist the first access network device and the core network device in determining the paging area based on a plurality of paging capabilities of the terminal device, so as to avoid paging the terminal device in the cell on which the terminal device does not camp as much as possible, thereby saving paging resources.

The paging capability information of the terminal device may indicate one or more of the following capabilities.

Capability 1: Maximum transmit power supported by the terminal device on a first frequency band. To reduce interference between adjacent frequencies between networks, a transmit parameter, for example, the maximum transmit power, of the terminal device on some frequency bands (also referred to as additional frequency bands) needs to be additionally limited. The first frequency band may be considered as an additional limited frequency band. In this embodiment of this application, the maximum transmit power supported by the terminal device on the first frequency band may be represented by a parameter "additionalSpectrumEmission". It should be understood that the parameter "additionalSpectrumEmission" and a parameter "additionalPmax" are included in "NR-NS-PmaxList" that corresponds to each operating band and that is supported by the terminal device, that is, a maximum transmit power list corresponding to each operating band. The parameter "additionalPmax" indicates a maximum transmit power that is of each frequency band and that is supported by the terminal device. "NR-NS-PmaxList" includes at least one "additionalSpectrumEmission" and at least one "additionalPmax". "additionalSpectrumEmission" indicates a transmit power supported on the additional frequency band, and "additionalPmax" indicates a maximum transmit power of the additional frequency band. It should be understood that if the maximum transmit power supported by the terminal device meets a transmit power requirement of the first frequency band, the terminal device may access a cell (for example, the first cell) corresponding to the first frequency band. Otherwise, the terminal device considers that the first cell is barred, that is, the first cell is not allowed for the terminal device to access.

Capability 2: Bandwidth configuration supported by the terminal device, which may be a transmission bandwidth configuration that is of an uplink channel and that is supported by the terminal device. For example, bandwidths supported by the terminal device are 20 megahertz (MHz) and 50 MHz. It should be understood that when the bandwidth supported by the terminal device is greater than or equal to a bandwidth of an initial bandwidth part (initial bandwidth part, BWP) of a cell (for example, the first cell) and is less than or equal to a carrier bandwidth (carrier bandwidth) of the first cell, the terminal device may access the first cell. Otherwise, the terminal device considers that the first cell is barred. It should be noted that the capability information may be specific to an uplink bandwidth or a downlink bandwidth. For example, if a bandwidth of an uplink initial bandwidth part of the first cell is 60 MHz, and uplink bandwidths (20 MHz and 50 MHz) supported by the capability of the terminal device are both less than 60 MHz, the first cell is barred for the terminal device to access. For another example, if the carrier bandwidth is 80 MHz, and downlink bandwidths (100 MHz and 150 MHz) supported by the capability of the terminal device are both greater than 80 MHz, the terminal device considers that the first cell is barred.

Capability 3: Whether the terminal device supports a frequency offset of 7.5 kHz. It should be understood that some cells support the frequency offset of 7.5 kHz, and some cells do not support the frequency offset of 7.5 kHz. It is assumed that the first cell supports the frequency offset of 7.5 kHz, and the terminal device also supports the frequency offset of 7.5 kHz. In this case, the terminal device may access the first cell. Otherwise, the terminal device considers that the first cell is barred. Alternatively, if the first cell does not have the frequency offset of 7.5 kHz, the terminal device may access the first cell.

Capability 4: Type of the terminal device. As service types increase, there are more types of terminal devices, for example, an eMBB terminal device, a REDCAP terminal device, or an IAB-MT. A cell may support access of one type of terminal devices, or may support access of a plurality of types of terminal devices. For example, some cells support access of the IAB-MT, and some cells support access of the eMBB terminal device or the REDCAP terminal device. Alternatively, a cell supports access of some terminal devices in a same type of terminal devices. For example, if the first cell is barred for a REDCAP terminal device with 1 Rx chain to access, the REDCAP terminal device with the 1 Rx chain considers that the first cell is barred. For another example, if the first cell is barred for a REDCAP terminal device with 2 Rx chains to access, the REDCAP terminal device with the 2 Rx chains considers that the first cell is barred. It should be understood that the IAB-MT may notify the first access network device of a type of the IAB-MT by using an RRC setup complete (setup complete) message (also referred to as a Msg 5). The REDCAP terminal device may also indicate a type of the REDCAP terminal device to the access network device through signaling.

Capability 5: Number of Rx chains supported by the terminal device. As described in the capability 4, for the REDCAP terminal device, there is the REDCAP terminal device with the 1 Rx chain, there is the REDCAP terminal device with the 2 Rx chains, or there is a REDCAP terminal device with another number of Rx chains.

S202: The core network device sends the paging capability information of the terminal device to the first access network device, and correspondingly, the first access network device receives the paging capability information from the core network device.

The core network device may obtain a plurality of pieces of capability information of the terminal device based on the capability information indication message from the first access network device. When needing to page the terminal device, the core network device may send, to the first access network device, the paging capability information related to paging of the terminal device. The paging capability information may indicate one or more capabilities of the foregoing capability 1 to capability 5.

For example, the core network device may send a paging message (paging message) to the first access network device. The paging message includes the paging capability information of the terminal device, to indicate one or more of the capability 1 to the capability 5. In this embodiment of this application, the paging message indicates the paging capability of the terminal device in the following two indication manners. In a first indication manner, the paging message may include one or more capabilities of the capability 1 to the capability 5. This is direct. In a second indication manner, the paging message may include a capability information identifier of the terminal device (UE radio capability ID), and the capability information identifier may indicate one or more capabilities of the capability 1 to the capability 5. Because resource overheads occupied by the paging message based on the capability identifier of the terminal device are small, resource overheads can be reduced. It may be understood that the core network device may send the paging message to all access network nodes, including the first access network device, in a tracking area through an NG interface.

It should be noted that after obtaining the capability information of the terminal device, the core network device may store a correspondence between the capability information of the terminal device and the capability identifier of the terminal device. Similarly, after obtaining the capability information of the terminal device, the first access network device may also store a correspondence between the capability information of the terminal device and the capability identifier of the terminal device. If the access network device does not store capability information corresponding to a capability identifier of the terminal device, the access network device may request to obtain the capability information corresponding to the capability identifier from the core network device. After obtaining the capability information corresponding to the capability identifier, the access network device may store a correspondence between the capability identifier and the capability information.

S203: A first access network determines the paging area based on the paging capability information of the terminal device.

The first access network device may determine the paging capability information of the terminal device based on the paging message from the core network device. For example, the paging message indicates the paging capability information of the terminal device in the second indication manner. If the first access network device stores the correspondence between the capability identifier of the terminal device and the paging capability information, the first access network device may determine the paging capability information of the terminal device based on the stored correspondence and the capability identifier that is of the terminal device and that is included in the paging message. If the first access network device does not store the correspondence between the capability identifier of the terminal device and the paging capability information, the first access network device may request to obtain the correspondence between the capability identifier of the terminal device and the paging capability information from the core network device. For example, the first access network device may send a UE RADIO CAPABILITY ID MAPPING REQUEST message to the core network device, where the UE RADIO CAPABILITY ID MAPPING REQUEST message may include a capability identifier of the terminal device, and is used to request capability information corresponding to the capability identifier of the terminal device. Correspondingly, the core network device sends a UE RADIO CAPABILITY ID MAPPING RESPONSE message to the first access network device in response to the UE RADIO CAPABILITY ID MAPPING REQUEST message, where the message includes paging capability information (UE radio capability for paging) corresponding to the capability identifier of the terminal device.

After determining the paging capability information of the terminal device, the first access network device may determine a proper paging area based on the paging capability information of the terminal device, so as to avoid paging the terminal device in the cell on which the terminal device does not camp as much as possible, thereby saving paging resources. The paging area determined by the first access network device varies with the paging capability information of the terminal device. The following describes how the first access network device determines the paging area based on the paging capability information of the terminal device. For example, if any one of the following conditions is met, the first access network device determines that the paging area does not include the first cell, that is, the first access network device determines not to page the terminal device in the first cell.

Condition 1: The maximum transmit power supported by the terminal device does not meet the transmit power requirement of the first frequency band, the first frequency band corresponds to the first cell, and the type of the terminal device is not the IAB-MT. For example, one or more capabilities of the UE 1 include a type of the UE 1 and a maximum transmit power supported by the UE 1. If the maximum transmit power supported by the UE 1 does not meet the transmit power requirement of the first frequency band, and the type of the UE 1 is not the IAB-MT, the UE 1 does not camp on the first cell. Therefore, the first access network device may determine that the paging area does not include the first cell. It may be understood that, in consideration of interference between adjacent frequencies between networks, the maximum transmit power of the terminal device on the first frequency band is limited. If the maximum transmit power that is supported by the terminal device and that is indicated by the paging capability information does not meet the transmit power requirement of the first frequency band, the terminal device does not camp on the first cell corresponding to the first frequency band. In this case, the first access network device may determine not to page the terminal device in the first cell, that is, the paging area does not include the first cell. Compared with a current case in which the first access network device determines the paging area based on the obtained frequency band supported by the terminal device, a range of the paging area can be further narrowed down, thereby saving paging resources.

Condition 2: The bandwidth configuration supported by the terminal device is less than the initial bandwidth of the first cell, or the bandwidth configuration supported by the terminal device is greater than the carrier bandwidth of the first cell. For example, the one or more capabilities of the UE 1 include a bandwidth configuration of the UE 1. If the bandwidth configuration supported by the UE 1 is less than the initial bandwidth of the first cell, or the bandwidth configuration supported by the UE 1 is greater than the carrier bandwidth of the first cell, the UE 1 does not camp on the first cell. Therefore, the first access network device may determine that the paging area does not include the first cell. It should be noted that if the bandwidth configuration supported by the terminal device is less than the initial bandwidth of the first cell, or the bandwidth configuration supported by the terminal device is greater than the carrier bandwidth of the first cell, the first access network device does not need to page the terminal device in the first cell, that is, the paging area does not include the first cell. Therefore, the first access network device may compare the bandwidth configuration supported by the terminal device with an initial bandwidth or a carrier bandwidth of each cell, to determine cells on which the terminal device does not camp. In other words, the cells are excluded from the paging area, so that a range of the paging area is further narrowed down, thereby saving paging resources.

Condition 3: The terminal device does not support the frequency offset of 7.5 kHz, but the frequency offset of 7.5 kHz is set for the first cell. For example, the one or more capabilities of the UE 1 include whether the UE 1 supports the frequency offset of 7.5 kHz. If the UE 1 does not support the frequency offset of 7.5 kHz, and the frequency offset of 7.5 kHz is set for the first cell, the UE 1 does not camp on the first cell. In this case, the first access network device may determine that the paging area does not include the first cell. This solution can save paging resources.

Condition 4: The number of Rx chains supported by the terminal device is P, but the first cell is barred for the terminal device with the P Rx chains to access. Terminal devices of a same type may support different quantities of Rx chains. For example, a low-complexity or reduced capability (REDuced CAPability, REDCAP) terminal device may support one Rx chain, or may support two Rx chains. However, each cell may be barred or allowed for a terminal device supporting a specific number of Rx chains to access a network. The first access network device may determine, based on a number of Rx chains supported by a terminal device and a number of Rx chains of the terminal device for which the first cell is allowed to access, whether the terminal device camps on the first cell. For example, a number of Rx chains supported by the UE 1 is P. If the first cell is barred for the terminal device with the P Rx chains to access, the UE 1 does not camp on the first cell. According to this solution, the first access network device may page, based on the number P of Rx chains supported by the terminal device, the terminal device in a cell that is allowed for the terminal device with the P Rx chains to access, to save paging resources. In a possible implementation, a cell may be barred for a terminal device whose number of Rx chains falls within a value range to access, where the value range is greater than or equal to P, or may be less than or equal to P. For example, when the number of Rx chains supported by the terminal device is P, and the first cell is barred for a terminal device whose number of Rx chains is greater than P or less than P to access, the first access network device may also determine that the paging area does not include the first cell.

When any one of the condition 1 to the condition 4 is met, the first access network device determines that the paging area does not include the first cell. When determining the paging area, the first access network device may sequentially determine whether the condition 1 to the condition 4 are met. For example, the first access network device may determine whether the condition 1 is met. If the condition 1 is met, it is determined that the paging area does not include the first cell. If the condition 1 is not met, it is determined that the paging area includes the first cell. Then, the first access network device may determine whether the condition 2 is met, to determine whether the paging area includes the first cell. If the condition 2 is met, the paging area does not include the first cell. If the condition 2 is not met, the paging area may include the first cell. Then, the first access network device may determine whether the condition 3 is met, to determine whether the paging area includes the first cell. If the condition 3 is met, the paging area does not include the first cell. If the condition 3 is not met, the paging area may include the first cell. Then, the first access network device may determine whether the condition 4 is met, to determine whether the paging area includes the first cell. If the condition 4 is met, the paging area does not include the first cell. If the condition 4 is not met, the paging area may include the first cell. It should be noted that a sequence in which the first access network device determines whether the condition 1 to the condition 4 are met is not limited in this embodiment of this application. For example, the first access network device may perform determining in a sequence of the condition 1 to the condition 4, or may perform determining in a sequence of the condition 1, the condition 3, the condition 2, and the condition 4.

When the foregoing condition 1 to condition 4 are not met, if none of a selected PLMN, a registered PLMN, and an equivalent PLMN that correspond to the first cell provides tracking area code (trackingAreaCode), the first cell is barred for the terminal device to access, that is, the terminal device does not camp on the first cell. In other words, it may be considered that, that none of the selected PLMN, the registered PLMN, and the equivalent PLMN that correspond to the first cell provides the tracking area code (trackingAreaCode) is a condition 5. If the condition 5 is met, the first access network device determines that the paging area does not include the first cell. When determining that the condition 1 to the condition 4 are not met, the first access network device may continue to determine whether the condition 5 is met.

Particularly, when the foregoing condition 1 to condition 4 are not met, if the terminal device is the IAB-MT, and none of the selected PLMN, the registered PLMN, or the equivalent PLMN that corresponds to the first cell, a selected stand-alone non-public network (Stand-alone Non-Public Network, SNPN), or a registered SNPN provides IAB-Support, the first cell is barred for the terminal device to access, that is, the terminal device does not camp on the first cell. In this case, the first access network device determines that the paging area does not include the first cell either, so as to avoid paging the terminal device in the first cell, thereby saving paging resources.

S204: The first access network device sends paging to the terminal device in the paging area, to page the terminal device.

After determining the paging area, the first access network device may send paging in the paging area. Because the paging area determined by the first access network device does not include the first cell on which the terminal device does not camp, paging resources can be saved.

In a possible implementation, the first access network device includes a CU and a DU. In this embodiment of this application, the first access network device may determine the paging area via the CU or the DU. This is flexible.

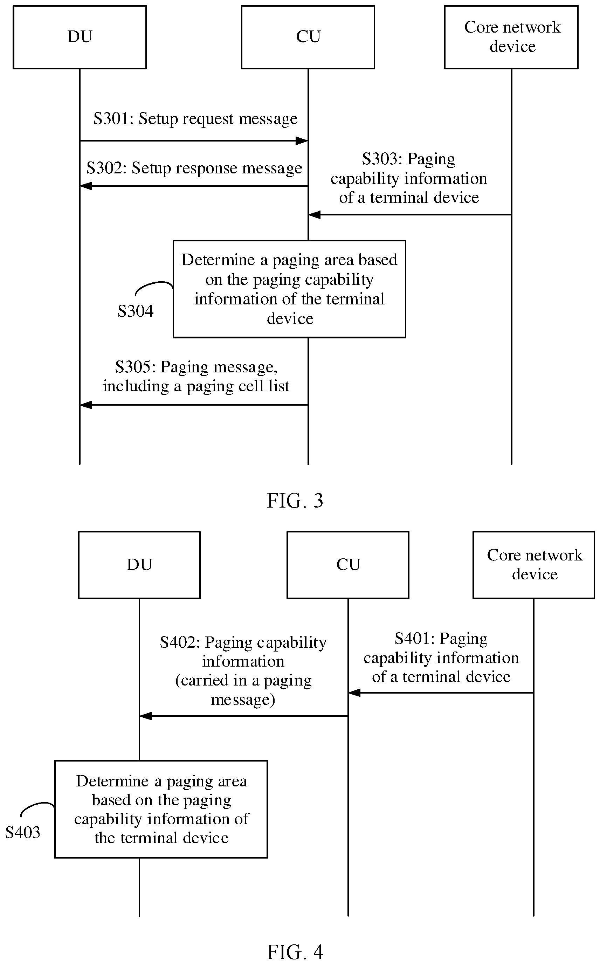

For example, FIG. 3 is a schematic flowchart of a second communication method according to an embodiment of this application. In FIG. 3, an example in which a first access network device receives paging capability information of a terminal device via a CU, and determines a paging area via the CU is used.

S301: A DU sends a setup request (setup request) message to the CU, to establish a connection to the CU.

The setup request message may carry a system information block (system information block, SIB) 1. After receiving the setup request message, the CU may obtain cell configuration information based on the SIB 1, to establish the connection to the DU.

S302: The CU sends a setup response (setup response) message to the DU, and correspondingly, the DU receives the setup response message from the CU.

The CU receives the setup request message from the DU, and sends the setup response message to the DU in response to the setup request message.

S303: A core network device sends paging capability information to the CU, and correspondingly, the CU receives the paging capability information from the core network device.

A specific implementation of S303 is the same as a specific implementation of S202. For details, refer to content related to S202. Details are not described herein again.

S304: The CU determines a paging area based on the paging capability information of the terminal device.

A specific implementation of S304 is the same as a specific implementation of S203. For details, refer to content related to S203. Details are not described herein again.

S305: The CU sends a paging message to the DU, and correspondingly, the DU receives the paging message from the CU, where the paging message includes a paging cell list (paging cell list).

The CU determines the paging area based on the paging capability information of the terminal device, and may determine the paging cell list based on the cell configuration information from the DU. It should be understood that the paging cell list includes the paging area determined by the CU. After receiving the paging message, the DU initiates paging in a cell included in the paging cell list.

FIG. 4 is a schematic flowchart of a third communication method according to an embodiment of this application. In FIG. 4, an example in which a first access network device receives paging capability information of a terminal device via a CU, and sends the paging capability information to a DU via the CU, to enable the DU to determine a paging area based on the paging capability information from the CU is used. The DU determines the paging area based on the paging capability information of the terminal device, and may directly select, from a cell list sent by the CU based on known cell configuration information, a cell in which paging needs to be performed (that is, a paging cell list is determined), and no more signaling interaction is required, thereby simplifying a procedure.

S401: A core network device sends paging capability information of a terminal device to a CU, and correspondingly, the CU receives the paging capability information from the core network device.

The paging capability information may be carried in a paging message sent by the core network device, and the CU determines the paging capability information of the terminal device from received paging. Specifically, for an implementation of S401, refer to related content of S202. Details are not described herein again.

S402: The CU sends the paging capability information of the terminal device to the DU, and correspondingly, the DU receives the paging capability information from the CU.

After obtaining the paging capability information of the terminal device, the CU may forward the paging capability information of the terminal device to the DU, to enable the DU to determine a paging area. For example, the CU may send the paging message to the DU, and the paging message may indicate the paging capability information. For a manner in which the paging message indicates the paging capability information, refer to related descriptions of the first indication manner and the second indication manner in S202. Details are not described herein again.

S403: The DU determines the paging area based on a paging capability of the terminal device.

A specific implementation of S403 is the same as an implementation of S203. For details, refer to content related to S203. Details are not described herein again.

It should be noted that the procedures shown in FIG. 3 and FIG. 4 are implemented in different architectures of the first access network device in the embodiment shown in FIG. 2. For related content in FIG. 3 and FIG. 4, refer to related content in the embodiment shown in FIG. 2.

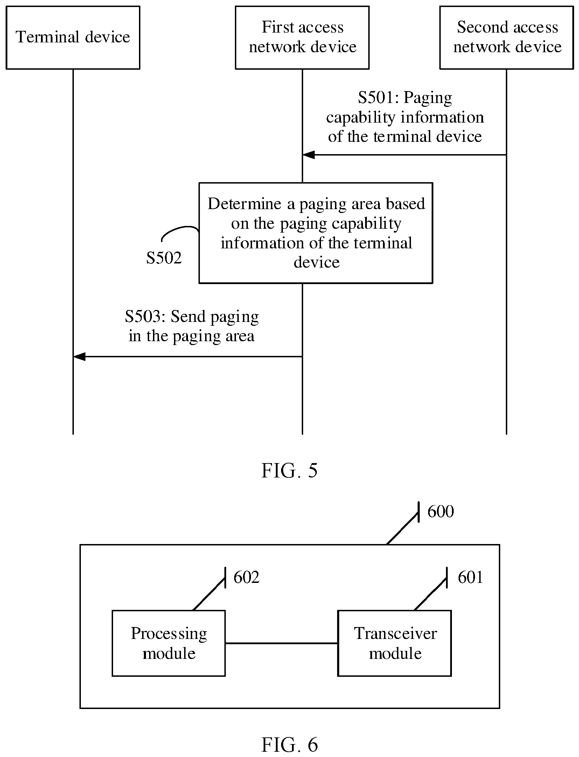

The following describes RAN paging. FIG. 5 is a schematic flowchart of a fourth communication method according to an embodiment of this application. As shown in FIG. 5, a RAN paging procedure is as follows.

S501: A second access network device sends paging capability information of a terminal device to a first access network device, and correspondingly, the first access network device receives the paging capability information of the terminal device from the second access network device.

The first access network device is a serving access network device of the terminal device, and the second access network device is a last access network device that serves the terminal device before the first access network device. In this embodiment of this application, the second access network device may initiate paging for the terminal device. The core network device may send the paging capability information of the terminal device to the second access network device based on RRC inactive-mode core network assistance information (core network assistance information for RRC inactive). After obtaining the paging capability information of the terminal device, the second access network device may send the paging capability information of the terminal device to the first access network device. For example, the second access network device may generate a paging message indicating the paging capability information of the terminal device, and send the paging message to the first access network device. It may be understood that the paging capability information sent by the second access network device to the first access network device may indicate one or more of the capability information 1 to the capability information 5.

For a specific implementation of indicating the paging capability information by the paging message, refer to related content of S202. Details are not described herein again.

S502: The first access network device determines a paging area based on the paging capability information of the terminal device.

A specific implementation of S502 is the same as a specific implementation of S203. For details, refer to content related to S203. Details are not described herein again.

S503: The first access network device sends paging to the terminal device in the paging area, to page the terminal device.

A specific implementation of S503 is the same as a specific implementation of S204. For details, refer to content related to S204. Details are not described herein again.

In the solution provided in embodiments of this application, the core network device or the second access network device may provide more paging capability information of the terminal device for the first access network device, to enable the first access network device to determine the paging area based on a plurality of pieces of paging capability information of the terminal device, so as to avoid paging the terminal device in the cell on which the terminal device does not camp as much as possible, thereby saving paging resources.

In the four communication methods provided in this application, the methods provided in embodiments of this application are separately described from perspectives of interaction between the terminal device, the access network device, and the core network device. Steps performed by the access network device may be implemented by different functional entities that form the access network device. In other words, functional entities that perform the steps of the access network device may be located in different physical entities. For example, a first functional entity is configured to determine the paging capability information. A second functional entity is configured to send the paging capability information. In other words, the first functional entity and the second functional entity jointly complete the steps performed by the network device in embodiments of this application. A specific division manner of the functional entities is not limited in this application. For example, when the network architecture includes one or more DUs, one or more CUs, and one or more radio frequency units (radio unit, RU), the steps performed by the access network device may be implemented by one or more of the DU, the CU, and the RU. To implement functions in the methods provided in the foregoing embodiments of this application, the terminal device and the access network device may include a hardware structure and/or a software module, to implement the foregoing functions in a form of a hardware structure, a software module, or a combination of the hardware structure and the software module. Whether a function in the foregoing functions is performed by using the hardware structure, the software module, or the combination of the hardware structure and the software module depends on particular applications and design constraints of the technical solutions.

An embodiment of this application further provides a communication apparatus. The following describes, with reference to the accompanying drawings, communication apparatuses configured to implement the foregoing methods in embodiments of this application.

FIG. 6 is a possible example block diagram of a communication apparatus in this application. The communication apparatus 600 may correspondingly implement a function or a step implemented by the core network device, the first access network device, or the second access network device in the foregoing method embodiment. The communication apparatus may include a transceiver module 601 and a processing module 602. Optionally, the communication apparatus may further include a storage module. The storage module may be configured to store instructions (code or a program) and/or data. The transceiver module 601 and the processing module 602 may be coupled to the storage module. For example, the processing module 602 may read the instructions (the code or the program) and/or the data in the storage module, to implement a corresponding method. The foregoing modules may be disposed independently, or may be partially or completely integrated.

It should be understood that the processing module 602 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The transceiver module 601 is an interface circuit of the apparatus, and is configured to receive a signal from another apparatus. For example, when the apparatus is implemented in a form of a chip, the transceiver module 601 is an interface circuit used by the chip to receive a signal from another chip or apparatus, or is an interface circuit used by the chip to send a signal to another chip or apparatus.

The communication apparatus 600 may be the core network device, the first access network device, or the second access network device in the foregoing embodiments, or may be a chip used in the core network device, the first access network device, or the second access network device. For example, when the communication apparatus 600 is the core network device, the first access network device, or the second access network device, the processing module 602 may be, for example, a processor, and the transceiver module 601 may be, for example, a transceiver. Optionally, the transceiver may include a radio frequency circuit, and the storage unit may be, for example, a memory. For example, when the communication apparatus 600 is a chip used in the core network device, the first access network device, or the second access network device, the processing module 602 may be, for example, a processor, and the transceiver module 601 may be, for example, an input/output interface, a pin, or a circuit. The processing module 602 may execute computer-executable instructions stored in the storage unit. Optionally, the storage unit is a storage unit in the chip, for example, a register or a buffer. Alternatively, the storage unit may be a storage unit that is in the network device, the terminal device, or a location management device and that is located outside the chip, for example, a read-only memory (read-only memory, ROM), another type of static storage device that can store static information and instructions, or a random access memory (random access memory, RAM).

In some possible implementations, the communication apparatus 600 can correspondingly implement behavior and a function of the first access network device in the foregoing method embodiment. For example, the communication apparatus 600 may be the first access network device, or may be a component (for example, a chip or a circuit) used in the first access network device. The transceiver module 601 may be configured to support communication between the first access network device and another network entity, for example, support communication between the first access network device and the core network device shown in FIG. 2 or the second access network device shown in FIG. 5. The processing module 602 is configured to control and manage an action of the first access network device. For example, the processing module 602 is configured to support the first access network device in performing all operations, except receiving and sending operations, of the first access network device in FIG. 2 or FIG. 5. For example, the transceiver module 601 may be configured to perform all receiving or sending operations performed by the first access network device in the embodiment shown in FIG. 2, for example, S201, S202, and S204 in the embodiment shown in FIG. 2, and/or configured to support another process of the technology described in this specification. The processing module 602 is configured to perform all operations, except receiving and sending operations, performed by the first access network device in the embodiment shown in FIG. 2, for example, S203 in the embodiment shown in FIG. 2, and/or configured to support another process of the technology described in this specification. For example, the transceiver module 601 may be configured to perform all receiving or sending operations performed by the first access network device in the embodiment shown in FIG. 5, for example, S501 and S503 in the embodiment shown in FIG. 5, and/or configured to support another process of the technology described in this specification. The processing module 602 is configured to perform all operations, except receiving and sending operations, performed by the first access network device in the embodiment shown in FIG. 5, for example, S502 in the embodiment shown in FIG. 5, and/or configured to support another process of the technology described in this specification.

In some embodiments, the transceiver module 601 is configured to receive paging capability information from a core network device or a second access network device. The processing module 602 is configured to determine a paging area based on the paging capability information. The transceiver module 601 is further configured to send a paging message to a terminal device in the paging area. The paging capability information indicates one or more of the following capabilities: a maximum transmit power supported by the terminal device on a first frequency band; a bandwidth configuration supported by the terminal device; whether the terminal device supports a frequency offset of 7.5 kHz; a type of the terminal device; or a number of Rx chains supported by the terminal device.

In an optional implementation, the paging capability information is a capability information identifier of the terminal device.

In an optional implementation, the processing module 602 is specifically configured to: if any one of the condition 1, the condition 2, the condition 3, or the condition 4 is met, a first determined paging area does not include the first cell.

The one or more capabilities include the type of the terminal device and the maximum transmit power supported by the terminal device. The condition 1 includes that the type of the terminal device is not an IAB-MT, the maximum transmit power supported by the terminal device does not meet a transmit power requirement of the first frequency band, and the first frequency band corresponds to the first cell. The one or more capabilities include the bandwidth configuration supported by the terminal device, and the condition 2 includes that the bandwidth configuration supported by the terminal device is less than an initial bandwidth of the first cell, or the bandwidth configuration supported by the terminal device is greater than a carrier bandwidth of the first cell. The one or more capabilities include that the terminal device does not support the frequency offset of 7.5 kHz, the condition 3 includes that the terminal device does not support the frequency offset of 7.5 kHz, and the frequency offset of 7.5 kHz is set for the first cell. The one or more capabilities include that the number of Rx chains supported by the terminal device is P, the condition 4 includes that the number of Rx chains supported by the terminal device is P, and the first cell is barred for the terminal device with the P Rx chains to access.

In an optional implementation, the processing module 602 is specifically configured to: if it is determined that none of a selected PLMN, a registered PLMN, and an equivalent PLMN that correspond to the first cell provides tracking area code, determine that the paging area does not include the first cell.

In an optional implementation, the communication apparatus 600 includes a CU and a DU. The transceiver module 601 receives the paging capability information via the CU, and the processing module 602 determines the paging area via the CU.

In an optional implementation, the communication apparatus 600 includes a CU and a DU. The transceiver module 601 receives the paging capability information, and sends the paging capability information to the DU via the CU. The processing module 602 determines the paging area via the DU.

In some possible implementations, the communication apparatus 600 can correspondingly implement behavior and a function of the core network device or the second access network device in the foregoing method embodiment. For example, the communication apparatus 600 may be the core network device or the second access network device, or may be a component (for example, a chip or a circuit) used in the network device. The transceiver module 601 may be configured to support communication between the core network device or the second access network device and another network entity, for example, support communication between the core network device or the second access network device and the first access network device shown in FIG. 2 or FIG. 5. The processing module 602 is configured to control and manage an action of the core network device or the second access network device. For example, the processing module 602 is configured to support the core network device or the second access network device in performing all operations, except sending and receiving operations, in FIG. 2 or FIG. 5. For example, the transceiver module 601 may be configured to perform all receiving or sending operations performed by the core network device in the embodiment shown in FIG 2, for example, S201 and S202 in the embodiment shown in FIG. 2, and/or configured to support another process of the technology described in this specification. The processing module 602 is configured to perform all operations, except receiving and sending operations, performed by the core network device in the embodiment shown in FIG. 2, and/or configured to support another process of the technology described in this specification. For another example, the transceiver module 601 may be configured to perform all receiving or sending operations performed by the second access network device in the embodiment shown in FIG. 5, for example, S501 in the embodiment shown in FIG. 5, and/or configured to support another process of the technology described in this specification. The processing module 602 is configured to perform all operations, except receiving and sending operations, performed by the second access network device in the embodiment shown in FIG. 5 and/or configured to support another process of the technology described in this specification.

In some embodiments, the processing module 602 is configured to obtain paging capability information of a terminal device. The transceiver module 601 is configured to send the paging capability information to a first access network device. The paging capability information indicates one or more of the following capabilities: a maximum transmit power supported by the terminal device on a first frequency band; a bandwidth configuration supported by the terminal device; whether the terminal device supports a frequency offset of 7.5 kHz; a type of the terminal device; or a number of Rx chains supported by the terminal device.

In an optional implementation, the paging capability information is a capability information identifier of the terminal device.

It should be understood that in embodiments of this application, the processing module 602 may be implemented by a processor or a processor-related circuit component, and the transceiver module 601 may be implemented by a transceiver or a transceiver-related circuit component.

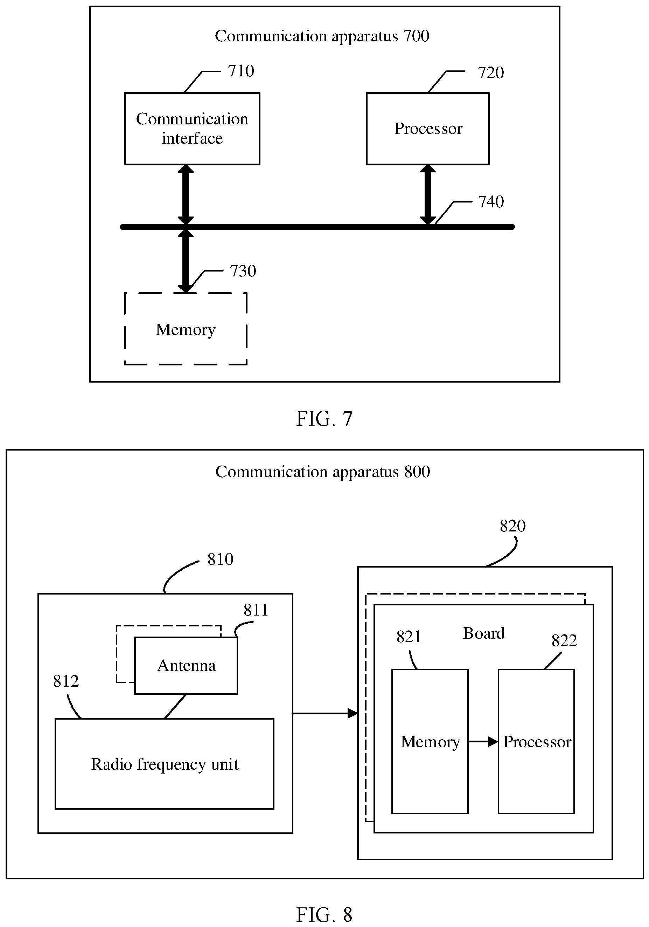

FIG. 7 shows a communication apparatus 700 according to embodiments of this application. The communication apparatus 700 may be a first access network device, a second access network device, or a core network device. Alternatively, the communication apparatus 700 may be an apparatus that can support the first access network device, the second access network device, or the core network device in implementing a corresponding function in the method provided in embodiments of this application. The communication apparatus 700 may alternatively be a chip system. In embodiments of this application, the chip system may include a chip, or may include the chip and another discrete component.

In a hardware implementation, the transceiver module 601 may be a transceiver, and the transceiver is integrated into the communication apparatus 700 to form a communication interface 710. The communication apparatus 700 includes at least one processor 720. The processor 720 may be a CPU, a microprocessor, an ASIC, or one or more integrated circuits configured to control program execution of the solutions in this application, and is configured to implement or support the communication apparatus 700 in implementing a function of the first access network device, the second access network device, or the core network device in the method provided in embodiments of this application. For details, refer to detailed description in the method example. Details are not described herein again.

If the communication apparatus 700 is configured to implement a function of the first access network device in embodiments of this application, the communication interface 710 may be configured to receive paging capability information from a core network device or a second access network device. The processor 720 is configured to determine a paging area based on the paging capability information. The communication interface 710 is further configured to send a paging message to a terminal device in the paging area. The paging capability information indicates one or more of the following capabilities: a maximum transmit power supported by the terminal device on a first frequency band; a bandwidth configuration supported by the terminal device; whether the terminal device supports a frequency offset of 7.5 kHz; a type of the terminal device; or a number of Rx chains supported by the terminal device.

If the communication apparatus 700 is configured to implement a function of the second access network device or the core network device in embodiments of this application, the processor 720 may be configured to obtain paging capability information of a terminal device. The communication interface 710 may be configured to send the paging capability information to a first access network device. The paging capability information indicates one or more of the following capabilities: a maximum transmit power supported by the terminal device on a first frequency band; a bandwidth configuration supported by the terminal device; whether the terminal device supports a frequency offset of 7.5 kHz; a type of the terminal device; or a number of Rx chains supported by the terminal device.

The communication apparatus 700 may further include at least one memory 730, configured to store a computer program and/or data. The memory 730 is coupled to the processor 720. The coupling in embodiments of this application may be an indirect coupling or a communication connection between apparatuses, units, or modules in an electrical form, a mechanical form, or another form, and is used for information exchange between the apparatuses, the units, or the modules. The processor 720 may cooperate with the memory 730. The processor 720 may execute the program instructions and/or the data stored in the memory 730, to enable the communication apparatus 700 to implement a corresponding method. At least one of the at least one memory may be included in the processor 720.

The communication apparatus 700 may further include the communication interface 710, configured to communicate with another device or a communication network, for example, a RAN, a wireless local area network (wireless local area network, WLAN), or a wired access network, through any transceiver-type apparatus. The communication interface 710 is configured to communicate with another device through a transmission medium, so that an apparatus in the communication apparatus 700 can communicate with the device. For example, when the communication apparatus 700 is the first access network device, the device is the second access network device or the core network device; or when the communication apparatus is the core network device, the device is the first access network device. The processor 720 may receive and send data through the communication interface 710. The communication interface 710 may be specifically a transceiver.

A specific connection medium between the communication interface 710, the processor 720, and the memory 730 is not limited in embodiments of this application. In embodiments of this application, the memory 730, the processor 720, and the communication interface 710 are connected through a bus 740 in FIG. 7, and the bus is represented by a bold line in FIG. 7. A manner of a connection between other components is merely an example for description, and is not limited thereto. The bus may be classified into an address bus, a data bus, a control bus, and the like. For ease of representation, only one bold line is used for representation in FIG. 7, but this does not mean that there is only one bus or only one type of bus.

In embodiments of this application, the processor 720 may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

The memory 730 may be a ROM or another type of static storage device that can store static information and instructions, a RAM or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other optical disk storage and optical disc storage (including a compact disc, a laser disc, an optical disc, a digital versatile disc, a Bluray disc, and the like), a magnetic disk storage medium or another magnetic storage device, or any other medium that can be configured to carry or store expected program code in a form of an instruction or a data structure and that can be accessed by a computer, but is not limited thereto. The memory may exist independently, and is connected to the processor through the bus 740. Alternatively, the memory may be integrated with the processor.

The memory 730 is configured to store computer-executable instructions for executing the solutions of this application, and the processor 720 controls the execution. The processor 720 is configured to execute the computer-executable instructions stored in the memory 730, to implement the communication methods provided in the following embodiments of this application.

Optionally, the computer-executable instructions in embodiments of this application may also be referred to as application program code. This is not specifically limited in embodiments of this application.

It should be noted that the communication apparatus in the foregoing embodiment may be a core network device, a first access network device, or a second access network device, or may be a circuit, or may be a chip used in the core network device, the first access network device, or the second access network device, or another combined component or part that has functions of the core network device, the first access network device, or the second access network device. When the communication apparatus is the core network device, the transceiver module may be a transceiver, and may include a communication interface, a wire, and the like. The processing module may be a processor, for example, a CPU. When the communication apparatus is a component having a function of the core network device, the transceiver module may a communication interface, and the processing module may be a processor. When the communication apparatus is a chip system, the communication apparatus may be an FPGA, a dedicated ASIC, a system-on-a-chip (system-on-a-chip, SoC), a CPU, a network processor (network processor, NP), a DSP, a micro controller unit (micro controller unit, MCU), a programmable logic device (programmable logic device, PLD), or another integrated chip. The processing module 602 may be a processor of the chip system. The transceiver module 601 or a communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory through another component) and transmit the code instructions to the processor. The processor may be configured to run the code instructions to perform the method in the foregoing method embodiment. For another example, the interface circuit may alternatively be a signal transmission interface circuit between a communication processor and a transceiver.

For example, the communication apparatus in the foregoing embodiment may be a chip. The chip includes a logic circuit and an input/output interface, and may further include a memory. The input/output interface may be configured to receive code instructions (the code instructions are stored in the memory, and may be directly read from the memory, or may be read from the memory through another component), and transmit the code instructions to the logic circuit. The logic circuit may be configured to run the code instructions to perform the method in the foregoing method embodiment. Alternatively, the input/output interface may be a signal transmission interface circuit between the logic circuit and the transceiver.

FIG. 8 is a schematic diagram of a simplified structure of a communication apparatus. For ease of understanding and illustration, an example in which the communication apparatus is a base station is used in FIG. 8. The base station may be used in the system shown in FIG. 1, may be the access network device in FIG. 1, and performs a function of the first access network device or the second access network device in the foregoing method embodiment.

The communication apparatus 800 may include a transceiver 810, a memory 821, and a processor 822. The transceiver 810 may be used by the communication apparatus to perform communication, for example, configured to send or receive the foregoing paging capability information. The memory 821 is coupled to the processor 822, and may be configured to store a program and data that are necessary for the communication apparatus 800 to implement various functions. The processor 822 is configured to support the communication apparatus 800 in performing a corresponding function in the foregoing methods. The function may be implemented by invoking the program stored in the memory 821.

Specifically, the transceiver 810 may be a wireless transceiver, and may be configured to support the communication apparatus 800 in receiving and sending signaling and/or data through a radio air interface. The transceiver 810 may also be referred to as a transceiver unit or a communication unit. The transceiver 810 may include one or more radio frequency units 812 and one or more antennas 811. The radio frequency unit, for example, a remote radio unit (remote radio unit, RRU) or an active antenna unit (active antenna unit, AAU), may be specifically configured to: transmit a radio frequency signal, and perform conversion between the radio frequency signal and a baseband signal. The one or more antennas may be specifically configured to radiate and receive the radio frequency signal. Optionally, the transceiver 810 may include only the radio frequency unit. In this case, the communication apparatus 800 may include the transceiver 810, the memory 821, the processor 822, and the antenna.

The memory 821 and the processor 822 may be integrated, or may be independent of each other. As shown in FIG. 8, the memory 821 and the processor 822 may be integrated into a control unit 820 of the communication apparatus 800. For example, the control unit 820 may include a BBU of an LTE base station, and the baseband unit may also be referred to as a digital unit DU; or the control unit 820 may include a DU and/or a central unit CU in a base station in 8G or a future radio access technology. The control unit 820 may include one or more antenna panels. A plurality of antenna panels may jointly support a radio access network (for example, an LTE network) of a single access standard, or a plurality of antenna panels may separately support radio access networks (for example, an LTE network, a 5G network, and another network) of different access standards. The memory 821 and the processor 822 may serve one or more antenna panels. In other words, the memory 821 and the processor 822 may be separately disposed on each antenna panel. Alternatively, a plurality of antenna panels may share a same memory 821 and a same processor 822. In addition, a necessary circuit may be disposed on each antenna panel. For example, the circuit may be configured to implement coupling between the memory 821 and the processor 822. The transceiver 810, the processor 822, and the memory 821 may be connected by using a bus (bus) structure and/or another connection medium.

Based on the structure shown in FIG. 8, when the communication apparatus 800 needs to send data, the processor 822 may perform baseband processing on the to-be-sent data and output a baseband signal to the radio frequency unit, and the radio frequency unit performs radio frequency processing on the baseband signal and sends a radio frequency signal in a form of an electromagnetic wave through the antenna. When data is sent to the communication apparatus 800, the radio frequency unit receives the radio frequency signal by using the antenna, converts the radio frequency signal into the baseband signal, and outputs the baseband signal to the processor 822. The processor 822 converts the baseband signal into data, and processes the data.

Based on the structure shown in FIG. 8, the transceiver 810 may be configured to perform the steps performed by the transceiver module 601, and/or the processor 822 may be configured to invoke instructions in the memory 821, to perform the steps performed by the processing module 602.

An embodiment of this application further provides a communication system. Specifically, the communication system includes an access network device (for example, a first access network device, or even a second access network device) and a core network device, or may further include more access network devices and terminal devices. For example, the communication system includes a network device and a terminal device that are configured to implement related functions in any one of embodiments shown in FIG. 2 to FIG. 5.

The access network device is separately configured to implement some functions of the first access network device or the second access network device in embodiments of this application, for example, is configured to implement the functions of the first access network device or the second access network device in the embodiment shown in FIG. 2 or FIG. 5. The core network device is configured to implement some functions of a related core network device in embodiments of this application, for example, is configured to implement the function of the related core network device in any one of embodiments shown in FIG. 2 to FIG. 5. For details, refer to the related descriptions in the method embodiments. Details are not described herein again.

An embodiment of this application further provides a computer-readable storage medium, including instructions. When the instructions are run on a computer, the computer is enabled to perform the method performed by the first access network device, the second access network device, or the core network device in any one of the flowcharts in FIG. 2 to FIG. 5.

An embodiment of this application further provides a computer program product, including instructions. When the instructions are run on a computer, the computer is enabled to perform the method performed by the first access network device, the second access network device, or the core network device in any one of the flowcharts in FIG. 2 to FIG. 5.

An embodiment of this application provides a chip system. The chip system includes a processor, may further include a memory, and is configured to implement a function of the first access network device, the second access network device, or the core network device in the foregoing method. The chip system may include a chip, or may include the chip and another discrete component.

All or some of the methods in embodiments of this application may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

A person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
receiving, by a first access network device, paging capability information from a core network device or a second access network device; and
determining, by the first access network device, a paging area based on the paging capability information, and sending a paging message to a terminal device in the paging area, wherein the paging capability information indicates one or more of the following capabilities:
a maximum transmit power supported by the terminal device on a first frequency band;
a bandwidth configuration supported by the terminal device;
whether the terminal device supports a frequency offset of 7.5 kHz;
a type of the terminal device; or
a number of Rx chains supported by the terminal device.

2. The method according to claim 1, wherein the paging capability information is a capability information identifier of the terminal device.

3. The method according to claim 1 or 2, wherein the one or more capabilities comprise the type of the terminal device and the maximum transmit power supported by the terminal device on the first frequency band, and the determining, by the first access network device, a paging area based on the paging capability information comprises:
when the type of the terminal device is not an integrated access and backhaul mobile termination IAB-MT, and the maximum transmit power supported by the terminal device on the first frequency band does not meet a transmit power requirement of the first frequency band, determining, by the first access network device, that the paging area does not comprise a first cell, wherein the first frequency band corresponds to the first cell.

4. The method according to any one of claims 1 to 3, wherein the one or more capabilities comprise the bandwidth configuration supported by the terminal device, and the determining, by the first access network device, a paging area based on the paging capability information comprises:
when the bandwidth configuration supported by the terminal device is less than an initial bandwidth of the first cell, or the bandwidth configuration supported by the terminal device is greater than a carrier bandwidth of the first cell, determining, by the first access network device, that the paging area does not comprise the first cell.

5. The method according to any one of claims 1 to 4, wherein the one or more capabilities comprise whether the terminal device supports the frequency offset of 7.5 kHz, and the determining, by the first access network device, a paging area based on the paging capability information comprises:
when the terminal device does not support the frequency offset of 7.5 kHz, and the frequency offset of 7.5 kHz is set for the first cell, determining, by the first access network device, that the paging area does not comprise the first cell.

6. The method according to any one of claims 1 to 5, wherein the one or more capabilities comprise the number of Rx chains supported by the terminal device, and the determining, by the first access network device, a paging area based on the paging capability information comprises:
when the number of Rx chains supported by the terminal device is P, and the first cell is barred for the terminal device with the P Rx chains to access, determining, by the first access network device, that the paging area does not comprise the first cell.

7. The method according to any one of claims 1 to 6, wherein the first access network device comprises a central unit CU and a distributed unit DU, and the first access network device receives the paging capability information via the CU, and determines the paging area via the CU.

8. The method according to any one of claims 1 to 6, wherein the first access network device comprises a central unit CU and a distributed unit DU, and the first access network device receives the paging capability information via the CU, and sends the paging capability information to the DU via the CU for the DU to determine the paging area.

9. A paging method, comprising:
obtaining paging capability information of a terminal device; and
sending the paging capability information to a first access network device, wherein the paging capability information indicates one or more of the following capabilities:
a maximum transmit power supported by the terminal device on a first frequency band;
a bandwidth configuration supported by the terminal device;
whether the terminal device supports a frequency offset of 7.5 kHz;
a type of the terminal device; or
a number of Rx chains supported by the terminal device.

10. The method according to claim 9, wherein the paging capability information is a capability information identifier of the terminal device.

11. A communication apparatus, comprising a processing module and a transceiver module, wherein
the transceiver module is configured to receive paging capability information from a core network device or a second access network device;
the processing module is configured to determine a paging area based on the paging capability information; and
the transceiver module is further configured to send a paging message to a terminal device in the paging area, wherein the paging capability information indicates one or more of the following capabilities:
a maximum transmit power supported by the terminal device on a first frequency band;
a bandwidth configuration supported by the terminal device;
whether the terminal device supports a frequency offset of 7.5 kHz;
a type of the terminal device; or
a number of Rx chains supported by the terminal device.

12. The communication apparatus according to claim 11, wherein the paging capability information is a capability information identifier of the terminal device.

13. The communication apparatus according to claim 11 or 12, wherein the one or more capabilities comprise the type of the terminal device and the maximum transmit power supported by the terminal device on the first frequency band, and the processing module is specifically configured to:
when the type of the terminal device is not an integrated access and backhaul mobile termination IAB-MT, and the maximum transmit power supported by the terminal device on the first frequency band does not meet a transmit power requirement of the first frequency band, determine that the paging area does not comprise a first cell, wherein the first frequency band corresponds to the first cell.

14. The communication apparatus according to any one of claims 11 to 13, wherein the one or more capabilities comprise the bandwidth configuration supported by the terminal device, and the processing module is specifically configured to:
when the bandwidth configuration supported by the terminal device is less than an initial bandwidth of the first cell, or the bandwidth configuration supported by the terminal device is greater than a carrier bandwidth of the first cell, determine that the paging area does not comprise the first cell.

15. The communication apparatus according to any one of claims 11 to 14, wherein the one or more capabilities comprise whether the terminal device supports the frequency offset of 7. 5 kHz, and the processing module is specifically configured to:
when the terminal device does not support the frequency offset of 7.5 kHz, and the frequency offset of 7.5 kHz is set for the first cell, determine that the paging area does not comprise the first cell.

16. The communication apparatus according to any one of claims 11 to 15, wherein the one or more capabilities comprise the number of Rx chains supported by the terminal device, and the processing module is specifically configured to:
when the number of Rx chains supported by the terminal device is P, and the first cell is barred for the terminal device with the P Rx chains to access, determine that the paging area does not comprise the first cell.

17. The communication apparatus according to any one of claims 11 to 16, wherein the communication apparatus comprises a central unit CU and a distributed unit DU, the transceiver module receives the paging capability information via the CU, and the processing module determines the paging area via the CU.

18. The communication apparatus according to any one of claims 11 to 16, wherein the communication apparatus comprises a central unit CU and a distributed unit DU, and the transceiver module receives the paging capability information via the CU, and sends the paging capability information to the DU via the CU for the DU to determine the paging area.

19. A communication apparatus, comprising a processing module and a transceiver module, wherein
the processing module is configured to obtain paging capability information of a terminal device; and
the transceiver module is configured to send the paging capability information to a first access network device, wherein the paging capability information indicates one or more of the following capabilities:
a maximum transmit power supported by the terminal device on a first frequency band;
a bandwidth configuration supported by the terminal device;
whether the terminal device supports a frequency offset of 7.5 kHz;
a type of the terminal device; or
a number of Rx chains supported by the terminal device.

20. The communication apparatus according to claim 19, wherein the paging capability information is a capability information identifier of the terminal device.

21. A communication system, wherein the communication system comprises a first access network device, a core network device, and a terminal device, wherein
the core network device is configured to: obtain paging capability information of the terminal device, and send the paging capability information to the first access network device; and
the first access network device is configured to: determine a paging area based on the paging capability information, and send a paging message to the terminal device in the paging area, wherein the paging capability information indicates one or more of the following capabilities: a maximum transmit power supported by the terminal device on a first frequency band;
a bandwidth configuration supported by the terminal device;
whether the terminal device supports a frequency offset of 7.5 kHz;
a type of the terminal device; or
a number of Rx chains supported by the terminal device.

22. A communication apparatus, wherein the communication apparatus comprises a processor, and the processor is coupled to a memory, and is configured to invoke computer instructions in the memory, to enable the communication apparatus to perform the method according to any one of claims 1 to 8.

23. A communication apparatus, wherein the communication apparatus comprises a processor, and the processor is coupled to a memory, and is configured to invoke computer instructions in the memory, to enable the communication apparatus to perform the method according to either of claims 9 and 10.

24. A computer-readable storage medium, wherein the computer-readable storage medium stores computer instructions, and when the computer instructions are executed, a computer is enabled to perform the method according to any one of claims 1 to 8, or perform the method according to either of claims 9 and 10.
